# EUROPEAN PATENT SPECIFICATION

(11) **EP 4 083 545 B1**
(45) Date of publication and mention of the grant of the patent: **12.02.2025**
(21) Application number: 21315060.0
(22) Date of filing: 01.04.2021
(51) Int. Cl.: F25D 3/12, C01B 32/55

(54) **LOW PRESSURE CARBON SNOW INJECTOR**
NIEDERDRUCKINJEKTOR FÜR KOHLENSTOFFSCHNEE
INJECTEUR DE NEIGE CARBONIQUE À BASSE PRESSION

(43) Date of publication of application: 02.11.2022
(73) Proprietor: L'Air Liquide, société anonyme pour l'Étude et l'Exploitation des procédés Georges Claude, 75007 Paris (FR); Air Liquide Italia S.p.A., 20148 Milano (IT)
(72) Inventor: Emanuelli, Marco, 20158 Milan Milano (IT); Trotta, Silvano, 20158 Milan Milano (IT)
(74) Representative: Air Liquide

(56) References cited:
- US-A- 3 807 187
- US-A- 4 166 364
- US-A1- 2010 101 241

## Description

The present invention deals with the devices for making CO₂ snow, ready to be injected in an installation using such a snow, notably an installation of the food industry.

The invention is particularly interested in the installations (mixers) for cooling dough products, cooling being obtained thanks to the injection of CO₂ snow, with the following objectives :
- to show a better distribution of the snow inside the mixer, thanks to the introduction of the snow with a low kinetic energy, therefore to have a more homogeneous final temperature of the mixture.
- to reduce the amount of gas injected inside the mixer.

As well known by the skilled man, liquid storages of carbon dioxide (CO₂) are high pressure containers (average pressure is above 18 bar). The end user who therefore wants to create carbon snow starting from liquid storage will have to face the various problems that high pressure entails.

Currently, two different devices are used for making CO2 snow:
1. The Snow Horns: the system, installed directly on the lid of such dough mixers, expands the liquid CO₂ by pouring the carbonic snow and gas (generated by the change of state) onto the dough.

The limits of this system are linked to the enormous amount of energy that is released inside the mixer. This energy interferes with the volatile ingredients of the dough (flour, cocoa, yeast, etc ...), dirtying the equipment and dispersing part of the ingredients.

2. the "J Tube" systems : The expansion of the liquid phase, in this system, does not take place on the lid of the mixer but at the inlet of the equipment. In this way, thanks to a system of tangential pipes, the gaseous phase, lighter than the solid one, is separated thanks to the centrifugal force and brought directly to the outside. The gaseous phase therefore does not enter the dough, limiting the amount of energy that interferes with the ingredients.

The limits of this system are related to the amount of energy that the solid phase brings inside the mixer. Equipment for making snow is disclosed in US 3 807 187 A and US 4 166 364 A.

As will be described more in details below, the system proposed by the present invention allows the obtention of a snow, produced by the expansion of the liquid carbon dioxide of the tank source, at a much lower pressure.

For this purpose, the combination of the following means are implemented, connected to each other and preferably inserted inside a vacuum insulation in order to reduce thermal reentry from the outside and to improve the efficiency of the system:
1. .a Calibrated orifice, or any other expansion mean, but a calibrated orifice is preferred according to the invention.
2. a J-tube.
3. a Snow horn.
4. a Venturi system.
5. a Gas extraction pipe.

### a) a Calibrated orifice

The expansion of liquid carbon dioxide, thanks to the transition of state, transforms a part of the liquid flow into gas and a part into solid. The calibrated orifice, installed at the inlet of the equipment, allows the complete change of state of the liquid flow, transforming it into many small flows. At this point the energy of the flow begins to reduce. Depending on the required carbon snow flow rate, the calibrated orifice will be made with a suitable number and size of holes. A multiple holes calibrated orifice is preferred, instead of a one-hole orifice.

The calibrated orifices can be made for example with 24mm diameter stainless steel discs. This size shows ideal conditions for fitting into the downstream J-tube inlet fitting and easily replaced.

The holes, which make up the calibrated orifice, can have a diameter ranging between 1,1 mm and 1,9 mm, for the purpose of illustration to better understand the present proposal.

This dimension seems to show ideal conditions to have the maximum result in terms of transition of state for the incoming liquid.

A great advantage, in having a calibrated orifice with multiple holes instead of the traditional ones with only one hole, is to have the smaller size of the snow crystals. A smaller size of the snow crystals means better heat exchange between snow and the product to be cooled and a better homogenization of the temperature of the mixture. The final discharge of carbonic snow will then be calculated with the number and diameter of the holes that make up the calibrated orifice.

As will appear clearly to the skilled man, a calibrated orifice is a very relevant point of the system proposed here.

The calibrated orifice is installed at the inlet, just before the J-tube. Then the orifice transforms the carbon dioxide into solid/gas, and the J-tube, as will be explained below, divides, separates the gas from the solid, bringing it to the snow horn, the snow horn gently making the snow fall into the equipment or process using such a snow, for example a mixer in the food industry.

### b) a J-Tube

The flow of the liquid, once expanded, giving rise to the production of a diphasic gas-solid mixture, passes through a suitably bent tube (called traditionally a "J-tube" due to its shape) inside which the two phases, thanks to the centrifugal force, tend to separate: the solid phase, heavier than the gaseous phase, tends to go outwards of the tube, allowing that the solid phase is conveyed to a pipe that we will call a main pipe, and the gas phase is conveyed inside another pipe that we will call a secondary pipe.
c) a transition plate : wherein the end of the J-Tube fits into the plate, the plate being in its downstream side in gas connexion with two pipes, a main pipe and a secondary pipe, the main one at the top being able to carry the solid snow phase, and the second one at the bottom being able to carry the gaseous phase.
d) a Snow horn

At the exit of the J-tube, the main pipe, carrying snow is connected tangentially to the top of a cylinder (called snow horn). The high velocity of the fluid forces the solid phase (carbon snow) to descend towards the bottom of the cylinder along its circumference before falling outside. At this point, the lighter gas phase (which is generated by sublimation of the solid phase) is released inside the cylinder without a preferential path. The motion of the gaseous fluid, due to its low temperature, is descending towards the outside of the snow horn.

### e) a Venturi system

At the outlet of the J-tube, the secondary pipe (the one carrying gas) is connected to a venturi system installed on the top of the snow horn. The high speed of the fluid, harnessed inside the venturi system, generates a reduction in pressure inside the cylinder which sucks up the gaseous phase formed by sublimation of the solid phase which runs inside the cylinder. The part of gas exiting the J-tube, used to create the depression, and the part of gas intercepted by the venturi system are conveyed outside.

### f) a Gas extraction pipe

To increase the efficiency of the Venturi system and to distribute its suction effect along the entire cylinder, a perforated pipe is advantageously installed inside the snow horn. This pipe, connected to the Venturi system above, allows the gas formed to be sucked up along the entire length of the snow horn.

In other words, the system takes advantage of the benefits of both devices J-Tube and Snow horn) and eliminates their main limitations.

In fact, the capacity of the J-tube is exploited to immediately separate most of the gas that is produced by the passage of state. This gas flow, at high pressure, before being evacuated to the outside, is used inside the Venturi system to generate a vacuum inside the snow horn in order to further eliminate the gas that the J-tube has not been able to separate.

After the J-tube, the flow of carbon snow, which still has a great deal of energy, is injected into the snow horn tangentially to the circumference. In this way the carbonic snow loses part of its energy thanks to the friction generated between the flow and the walls of the snow horn. The end result is a flow of carbon snow that falls inside the mixer with a small amount of gas and low kinetic energy.

The invention deals therefore with an equipment for making CO₂ snow, ready to be injected in an installation using such a snow, notably an installation of the food industry, equipment comprising the following elements :
a) a device for expanding liquid carbon dioxide, for example a Calibrated orifice, able to receive the liquid carbon dioxide and to transform a part of the liquid flow into gas and a part into solid, said device being installed at the inlet of the equipment,
b) a J-Tube, said expansion device being installed at the inlet of the J-tube, the J-Tube being able to separate the diphasic gas-solid mixture produced by said expansion device into two phases, a solid phase heavier than the gaseous phase, tending to go outwards of the tube, and a gas phase tending to go on the inwards part of the Tube;
c) a transition plate : wherein the end of the J-Tube fits into the plate, the plate being in its downstream side in gas connexion with two pipes, a main pipe and a secondary pipe, the main one at the top being able to carry the solid snow phase, and the second one at the bottom being able to carry the gaseous phase.
d) a Snow Horn : wherein said main pipe is connected tangentially to the top of the Snow Horn.
   and
e) a Venturi System : wherein said secondary pipe is connected to the Venturi System which is installed on the top of the snow horn, in order that the high speed of the fluid, harnessed inside the Venturi System, generates a reduction in pressure inside the Horn, making it possible the sucking up of the gaseous phase formed by sublimation of the solid phase running inside the Horn, wherein the part of gas exiting the J-tube, used to create the depression, and the part of gas intercepted by the Venturi system are conveyed outside of the equipment.

The figures attached will help to better understand the present invention.

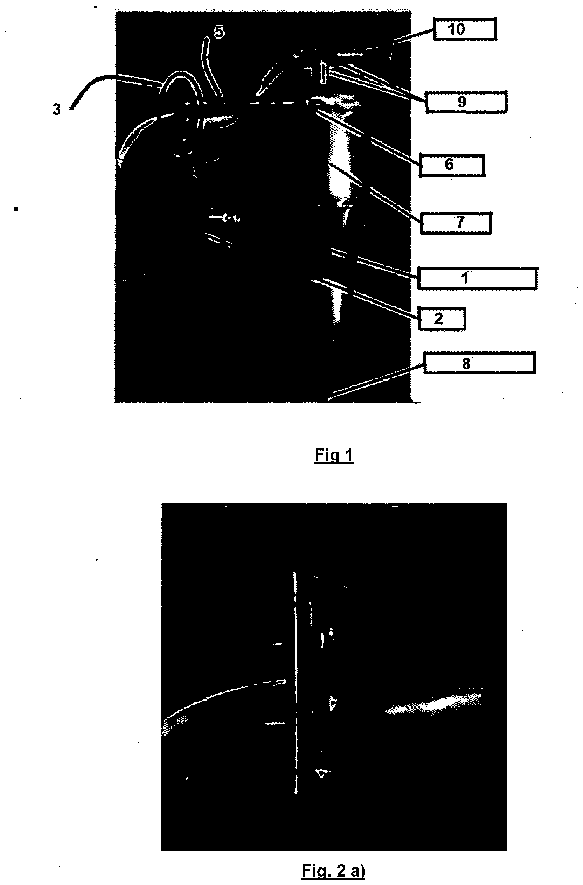

The following elements can be recognized on the Figure 1 annexed:
- 1 : orifice
- 2 : J Tube
- 3 : transition zone (plate) between the J Tube and the main and secondary pipes
- 4 : secondary pipe
- 5 : main pipe
- 6 : snow inlet inside the horn
- 7 : horn
- 8 : snow outlet to the user station
- 9 : venturi system
- 10 : gas outlet

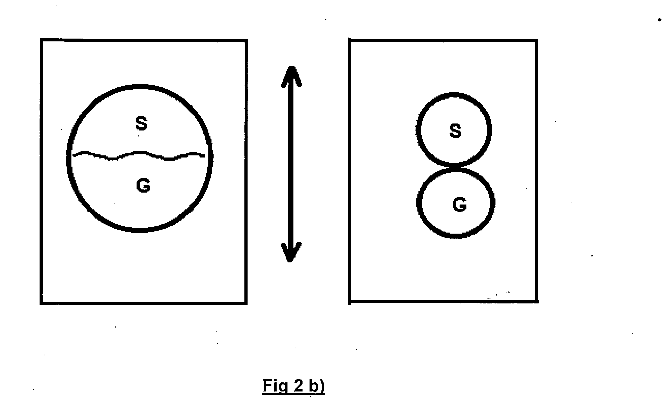

The Figure 2a) and 2b) in annex shows a schematic representation of the transition device 3 and help to better understand the structure and operation of this transition device :
- the left plate is "fixed" and connected (for example welded) to the end of the J-Tube;
- the right plate is "movable", it can go up and down;
- the upper pipe connected to the right plate is able to carry the snow to the snow horn whereas the lower pipe connected to the right plate is able to carry the gas phase to the Venturi system and from there to the outside;
- on the left part of the figure 2b), one can see in section the end of the J-tube that fits into the plate;
- on the right side of the figure 2b) on can see the the connection of the two pipes main and secondary, the first one at the top carrying the solid and the second one at the bottom carrying gas;

And the remarkable point about this transition plate lies in the fact that the following adjustment becomes possible :
- when the right plate is lowered, one gives the solid and diphasic part prevalence to enter. the downstream user station;
- whereas when the right plate is raised, one gives the gas and diphasic part prevalence to enter the Venturi system;
this adjustment being performed at the time of the installation of the equipment.

## Claims

1. An equipment for making CO₂ snow, ready to be injected in an installation using such a snow, notably an installation of the food industry, equipment comprising the following elements :
a) a device for expanding liquid carbon dioxide, for example a Calibrated orifice (1), able to receive the liquid carbon dioxide and to transform a part of the liquid flow into gas and a part into solid, said device being installed at the inlet of the equipment,
b) a J-Tube (2), said expansion device being installed at the inlet of the J-tube, the J-Tube being able to separate the diphasic gas-solid mixture produced by said expansion device into two phases, a solid phase heavier than the gaseous phase, tending to go outwards of the tube, and a gas phase tending to go on the inwards part of the J-Tube, **characterized by**
c) a transition plate (3), wherein the end of the J-Tube fits into the plate, the plate being in its downstream side in gas connexion with two pipes, a main pipe (5) and a secondary pipe (4), the main pipe being able to carry the solid snow phase, and the second pipe being able to carry the gaseous phase;
d) a Snow Horn (7), wherein said main pipe is connected tangentially to the top of the Snow Horn;
and
e) a Venturi System (9), wherein said secondary pipe is connected to the Venturi System which is installed on the top of the snow horn, in order that the high speed of the fluid, harnessed inside the Venturi System, generates a reduction in pressure inside the Horn, making it possible the sucking up of the gaseous phase formed by sublimation of the solid phase running inside the Horn, and wherein the part of gas exiting the J-tube, used to create the depression, and the part of gas intercepted by the Venturi system are conveyed outside (10) of the equipment.

2. An equipment according to claim 1, caracterized in that it comprises a Gas extraction pipe, being a perforated pipe, installed inside the snow horn, this pipe being connected to the Venturi system (9), to allow the gas formed inside the Horn to be sucked up along the entire length of the snow Horn.

3. An equipment according to claim 1 or 2, **characterized in that** said transition plate (3) comprises:
- a left plate which is fixed and connected, for example welded, to the end of the J-Tube;
- a right plate which is movable, being able to go up and down with respect to the left plate, this right plate being in gas connexion with said main and secondary pipes (5, 6).

## Patentansprüche

1. Einrichtung zur Herstellung von CO₂-Schnee, der in eine Anlage eingespritzt werden kann, die einen solchen Schnee verwendet, insbesondere eine Anlage der Lebensmittelindustrie, wobei die Einrichtung folgende Elemente umfasst:
a) eine Vorrichtung zum Entspannen von flüssigem Kohlendioxid, beispielsweise eine kalibrierte Öffnung (1), die in der Lage ist, das flüssige Kohlendioxid zu empfangen und einen Teil des Flüssigkeitsstroms in Gas und einen Teil in Feststoff umzuwandeln, wobei die Vorrichtung am Einlass der Einrichtung installiert ist,
b) ein J-Rohr (2), wobei die Entspannungsvorrichtung am Einlass des J-Rohrs installiert ist, wobei das J-Rohr in der Lage ist, das zweiphasige Gas-Feststoff-Gemisch, das durch die Entspannungsvorrichtung erzeugt wird, in zwei Phasen - eine feste Phase, die schwerer als die gasförmige Phase ist und sich tendenziell außen in dem Rohr bewegt, und eine Gasphase, die sich tendenziell auf dem nach innen gelegenen Teil des J-Rohrs bewegt - zu trennen, **gekennzeichnet durch**
c) eine Überleitungsplatte (3), wobei das Ende des J-Rohrs in die Platte hineinpasst, wobei die Platte an ihrer stromabwärts gelegenen Seite in Gasverbindung mit zwei Leitungen - einer Hauptleitung (5) und einer Sekundärleitung (4) - steht, wobei die Hauptleitung in der Lage ist, die feste Schneephase zu führen, und die zweite Leitung in der Lage ist, die gasförmige Phase zu führen;
d) ein Schneehorn (7), wobei die Hauptleitung tangential mit der Oberseite des Schneehorns verbunden ist;
und
e) ein Venturi-System (9), wobei die Sekundärleitung mit dem Venturi-System verbunden ist, das auf der Oberseite des Schneehorns installiert ist, damit die hohe Geschwindigkeit des Fluids, das im Inneren des Venturi-Systems genutzt wird, eine Druckreduzierung im Inneren des Horns bewirkt, was das Aufsaugen der gasförmigen Phase, die durch Sublimation der festen Phase, die das Innere des Horns durchläuft, gebildet wird, möglich macht, und wobei der Teil des Gases, der aus dem J-Rohr austritt und dazu verwendet wird, die Absenkung zu erzeugen, und der Teil des Gases, der durch das Venturi-System abgefangen wird, in die Umgebung (10) der Einrichtung verbracht werden.

2. Einrichtung nach Anspruch 1, **dadurch gekennzeichnet, dass** sie eine Gasabzugsleitung umfasst, bei der es sich um eine perforierte Leitung handelt, die im Inneren des Schneehorns installiert ist, wobei diese Leitung mit dem Venturi-System (9) verbunden ist, um zu erlauben, dass das Gas, das im Inneren des Horns gebildet wird, entlang der gesamten Länge des Schneehorns aufgesaugt wird.

3. Einrichtung nach Anspruch 1 oder 2, **dadurch gekennzeichnet, dass** die Überleitungsplatte (3) Folgendes umfasst:
- eine linke Platte, die am Ende des J-Rohrs befestigt und mit diesem verbunden, beispielsweise verschweißt, ist;
- eine rechte Platte, die bewegbar ist und die in der Lage ist, sich in Bezug auf die linke Platte nach oben und unten zu bewegen, wobei diese rechte Platte in Gasverbindung mit der Haupt- und der Sekundärleitung (5, 6) steht.

## Revendications

1. Équipement pour la fabrication de neige carbonique, prête à être injectée dans une installation utilisant une telle neige, notamment une installation de l'industrie alimentaire, l'équipement comprenant les éléments suivants :
a) un dispositif de détente du dioxyde de carbone liquide, par exemple un orifice calibré (1), apte à recevoir le dioxyde de carbone liquide et à transformer une partie du flux liquide en gaz et une partie en solide, ledit dispositif étant installé à l'entrée de l'équipement,
b) un tube en J (2), ledit dispositif de détente étant installé à l'entrée du tube en J, le tube en J étant capable de séparer le mélange diphasique gaz-solide produit par ledit dispositif de détente en deux phases, une phase solide plus lourde que la phase gazeuse, tendant à aller vers l'extérieur du tube, et une phase gazeuse tendant à aller sur la partie intérieure du tube en J, **caractérisé par**
c) une plaque de transition (3), l'extrémité du tube en J s'insérant dans la plaque, la plaque étant, dans sa partie aval, en liaison gazeuse avec deux tuyaux, un tuyau principal (5) et un tuyau secondaire (4), le tuyau principal pouvant transporter la phase solide de la neige, et le second tuyau pouvant transporter la phase gazeuse ;
d) un pavillon à neige (7), ledit tuyau principal étant relié tangentiellement au sommet du pavillon à neige ;
et
e) un système Venturi (9), ledit tuyau secondaire étant relié au système Venturi installé sur la partie supérieure du pavillon à neige, afin que la vitesse élevée du fluide, exploitée à l'intérieur du système Venturi, génère une réduction de la pression à l'intérieur du pavillon, rendant possible l'aspiration de la phase gazeuse formée par la sublimation de la phase solide s'écoulant à l'intérieur du pavillon, et la partie du gaz sortant du tube en J, utilisée pour créer la dépression, et la partie du gaz interceptée par le système Venturi étant acheminées à l'extérieur (10) de l'équipement.

2. Équipement selon la revendication 1, **caractérisé en ce qu'**il comprend un tuyau d'extraction de gaz, qui est un tuyau perforé, installé à l'intérieur du pavillon à neige, ce tuyau étant relié au système Venturi (9), pour permettre au gaz formé à l'intérieur du pavillon d'être aspiré sur toute la longueur du pavillon à neige.

3. Équipement selon la revendication 1 ou 2, **caractérisé en ce que** ladite plaque de transition (3) comprend :
- une plaque gauche qui est fixe et reliée, par exemple par soudure, à l'extrémité du tube en J ;
- une plaque droite qui est mobile, pouvant monter et descendre par rapport à la plaque gauche, cette plaque droite étant en liaison gazeuse avec lesdits tuyaux principal et secondaire (5, 6).
